# EUROPÄISCHE PATENTSCHRIFT

(11) **EP 3 072 172 B1**
(45) Veröffentlichungstag und Bekanntmachung des Hinweises auf die Patenterteilung: **21.02.2018**
(21) Anmeldenummer: 14790622.6
(22) Anmeldetag: 30.10.2014
(51) Int. Cl.: H01M 2/10, H01M 10/04, H01M 2/02, H01M 10/0525

(54) **AKKUMULATORANORDNUNG UND VERFAHREN ZU DEREN HERSTELLUNG**
RECHARGEABLE BATTERY ARRANGEMENT AND METHOD FOR PRODUCING SAME
ENSEMBLE DE BATTERIE ET PROCÉDÉ DE FABRICATION DE CELUI-CI

(30) Priorität: 19.11.2013 DE 102013112753
(43) Veröffentlichungstag der Anmeldung: 28.09.2016
(73) Patentinhaber: Johnson Controls Advanced Power Solutions GmbH, 30419 Hannover (DE)
(72) Erfinder: BRENNER, Helge, 30453 Hannover (DE); EHRLICH, Bernhard, 31535 Neustadt am Rübenberge (DE); JOSWIG, Ralf, 29690 Buchholz (DE)
(74) Vertreter: Trinks, Ole
(86) Internationale Anmeldenummer: PCT/EP2014/073288
(87) Internationale Veröffentlichungsnummer: WO 2015/074847

(56) Entgegenhaltungen:
- WO-A1-2013/120770
- DE-A1-102010 012 930
- US-A- 2 812 376
- US-A1- 2003 017 387

## Beschreibung

Die Erfindung betrifft eine Akkumulatoranordnung mit einer Vielzahl von Einzelzellen gemäß dem Oberbegriff des Anspruchs 1. Die Erfindung betrifft ferner ein Verfahren zur Herstellung einer solchen Akkumulatoranordnung gemäß dem Anspruch 11. Akkumulatoranordnungen nach dem Oberbegriff des Anspruchs 1 sind z.B. aus der WO 2012/135758 A1, der WO 2013/120770 A1, der US2003/017387 A1 oder der DE 10 2010 012930 A1 bekannt. Derartige Akkumulatoranordnungen mit prismatisch geformten Einzelzellen finden z.B. in Elektro- und Hybridfahrzeugen Anwendung. Die Vielzahl der Einzelzellen wird dabei durch ein Gehäuse oder einen Rahmen zu einem kompakten Akkumulatorblock zusammengehalten. Trotz der bereits sehr fortschrittlichen und weit entwickelten Akkumulatortechnik setzen sich Elektro- und Hybridfahrzeuge auf dem Markt nur relativ langsam durch.

Der Erfindung liegt die Aufgabe zugrunde, eine verbesserte Akkumulatoranordnung anzugeben, die hinsichtlich Gewicht, Kosten und Funktionalität weiter optimiert ist. Ferner soll ein Verfahren zur Herstellung einer solchen Akkumulatoranordnung angegeben werden.

Diese Aufgabe wird gemäß Anspruch 1 gelöst durch eine Akkumulatoranordnung mit einer Vielzahl von Einzelzellen, die jeweils als elektrochemische Akkumulatorzellen ausgebildet sind und jeweils prismatisch geformte Gehäuse aufweisen, wobei die Einzelzellen in wenigstens einer Reihe hintereinander angeordnet und in einem Gehäuse oder einem Rahmen angeordnet sind, so dass sie zu einem Akkumulatorblock zusammengehalten sind, wobei
a) eine, mehrere oder alle der Einzelzellen als Akkumulatorzelle ausgebildet sind, die in Abhängigkeit vom jeweiligen Ladezustand ihre Dicke verändert,
b) zumindest an einem Ende der Reihenanordnung der Einzelzellen zwischen der letzten Einzelzelle und dem Gehäuse oder dem Rahmen wenigstens ein elastisch verformbares Kompensationsbauteil angeordnet ist, das dazu eingerichtet ist, die infolge von Änderungen des Ladezustands auftretenden Dickenveränderungen von Einzelzellen und sich hieraus ergebenden Längenveränderungen der Reihenanordnung aufzunehmen und zu kompensieren,
dadurch gekennzeichnet, dass zumindest an einem Ende der Reihenanordnung der Einzelzellen wenigstens ein Vorspannbauteil zwischen der letzten Einzelzelle und dem Gehäuse oder dem Rahmen angeordnet ist, das diese letzte Einzelzelle gegenüber dem Gehäuse oder dem Rahmen abstützt, wobei über das wenigstens eine Vorspannbauteil die Reihenanordnung der Einzelzellen gegenüber dem Gehäuse oder dem Rahmen mit einer einstellbaren Vorspannkraft vorspannbar ist, und dass das wenigstens eine Vorspannbauteil einen inneren Hohlraum aufweist, der mit einem Füllmaterial befüllbar ist, wobei das Füllmaterial durch eine äußere Wand des wenigstens einen Vorspannbauteils in dem inneren Hohlraum gehalten wird. Die Erfindung hat den Vorteil, dass nunmehr hoch optimierte Einzelzellen als Akkumulatorzellen eingesetzt werden können, die in Abhängigkeit vom jeweiligen Ladezustand ihre Dicke reversibel verändern können. So kann die Dicke der Einzelzelle mit zunehmendem Ladezustand (SOC - State of charge) anwachsen und mit abnehmendem Ladezustand der Einzelzelle wieder geringer werden. Auf diese Weise können Einzelzellen zur Bildung der Akkumulatoranordnung verwendet werden, die mit relativ leichten, dünnwandigen Gehäusen der Einzelzellen ausgebildet sind, was sich günstig hinsichtlich des Gewichts und der Herstellkosten der Akkumulatoranordnung auswirkt. Die Erfindung erlaubt es sozusagen, "atmende" Einzelzellen in der Akkumulatoranordnung einzusetzen, ohne dass diese einer erhöhten Beschädigungsgefahr ausgesetzt sind. Hierzu ist vorgesehen, dass die Dickenveränderung der Einzelzelle bzw. der Einzelzellen und die daraus resultierende Längenveränderung der Reihenanordnung der Einzelzellen von wenigstens einem elastisch verformbaren Kompensationsbauteil aufgenommen und kompensiert wird. Durch seine elastischen Eigenschaften sorgt das Kompensationsbauteil dafür, dass die Reihenanordnung der Einzelzellen in jedem Ladezustand mechanisch sicher fixiert in dem Gehäuse bzw. dem Rahmen gehalten werden kann und immer unter einer gewissen Vorspannung stehen kann. Damit sind die Einzelzellen sicher und zuverlässig in dem Gehäuse bzw. dem Rahmen fixiert und können dennoch die erforderlichen Kompensationsbewegungen in Folge der Dickenveränderung der Einzelzellen durchführen. Durch eine solche Fixierung können die Einzelzellen den auftretenden Vibrationsbelastungen besser Stand halten.

Sofern die Akkumulatoranordnung ein Gehäuse zur Aufnahme der Einzelzellen aufweist, sind die Einzelzellen durch das Gehäuse ganz oder zumindest größtenteils gegenüber äußeren Umwelteinflüssen geschützt. Durch das Gehäuse 10 können die Einzelzellen sozusagen gekapselt werden. Sofern die Akkumulatoranordnung einen Rahmen zur Aufnahme der Einzelzellen aufweist, sind die Einzelzellen ebenfalls sicher fixiert und zu einem kompakten Akkumulatorblock zusammengehalten, wie bei einem Gehäuse, aber weniger gegenüber äußeren Umwelteinflüssen geschützt.

Das prismatische Gehäuse kann insbesondere ein quaderförmiges oder zumindest annährend quaderförmiges Gehäuse sein. Die Einzelzellen sind z.B. mit Ihrer jeweils flächenmäßig größten Gehäuseseite aneinander gereiht.

Die Reihenanordnung der Einzelzellen kann sich an dem anderen, der Seite des Kompensationsbauteils gegenüberliegenden Ende der Reihenanordnung der Einzelzellen entweder direkt an dem Gehäuse bzw. dem Rahmen abstützen oder an einem anderen Bauteil, insbesondere an wenigstens einem nachfolgend noch erläuterten Vorspannbauteil. Die Akkumulatoranordnung kann ein einziges Kompensationsbauteil oder mehrere nebeneinander (parallel) oder hintereinander (reihenartig) angeordnete Kompensationsbauteile aufweisen. Insbesondere kann das Kompensationsbauteil als auf Druck belastbares federndes Bauteil mit oder ohne Dämpfungseigenschaften ausgebildet sein. Das Kompensationsbauteil kann z.B. aus Schaumstoff, Silikon oder Gummimaterial gebildet sein, oder einer Kombination verschiedener solcher Materialien. Insbesondere kann das Kompensationsbauteil aus einem Material gebildet sein, dass zugleich federnde als auch dämpfende Eigenschaften hat.

Gemäß einer vorteilhaften Weiterbildung der Erfindung weist das Kompensationsbauteil eine Anordnung aus wenigstens einem Dämpferelement und wenigstens einer Druckfeder auf. Auf diese Weise können diskrete Bauelemente für die Funktion "Federung" und für die Funktion "Dämpfung" vorgesehen sein, die auf den jeweiligen Anwendungsfall separat optimiert werden können. Die Druckfeder kann z.B. aus Metall hergestellt sein, z.B. als Spiralfeder, Tonnenfeder, konische Feder, Tellerfeder oder ähnlich. Das Dämpferelement kann z.B. ein hydraulischer Dämpfer sein.

Gemäß einer vorteilhaften Weiterbildung der Erfindung ist das wenigstens eine Kompensationsbauteil zur Kompensation von Längenveränderungen der Reihenanordnung der Einzelzellen, die aus in Folge von Änderungen des Ladezustands auftretenden Dickenveränderungen resultieren, von wenigstens 10 mm ausgebildet. Dies erlaubt den Einsatz von Einzelzellen mit relativ großem Dickenveränderung-Hub.

Als Dickenveränderung der Einzelzelle wird eine Veränderung der geometrisehen Dimension der Einzelzelle in derjenigen Raumrichtung verstanden, die sich in Längsrichtung der Reihenanordnung der Vielzahl von Einzelzellen erstreckt. An zumindest einem Ende der Reihenanordnung der Einzelzellen ist wenigstens ein Vorspannbauteil zwischen der letzten Einzelzelle und dem Gehäuse oder dem Rahmen angeordnet, das diese letzte Einzelzelle gegenüber dem Gehäuse oder dem Rahmen abstützt. Über das wenigstens eine Vorspannbauteil ist die Reihenanordnung der Einzelzellen gegenüber dem wenigstens einen Kompensationsbauteil mit einer einstellbaren Vorspannkraft vorspannbar. Die Vorspannkraft ist insbesondere während der Herstellung der Akkumulatoranordnung willkürlich auf einen vorbestimmten Wert einstellbar. Dies hat den Vorteil, dass eine definierte Vorspannkraft auf die Reihenanordnung der Einzelzellen ausgeübt werden kann, die insbesondere die für die Einzelzellen spezifizierten Belastungsgrenzen erfüllt. Auf diese Weise ist eine sichere Fixierung der Einzelzellen in dem Gehäuse bzw. dem Rahmen möglich, ohne die Einzelzellen durch die Vorspannkraft zu beschädigen.

Gemäß einer vorteilhaften Weiterbildung der Erfindung ist das wenigstens eine Vorspannbauteil willkürlich steuerbar zumindest in Richtung der Längserstreckung der Reihenanordnung der Einzelzellen längenveränderbar ausgebildet. Durch willkürliche Steuerung kann somit die Längserstreckung des Vorspannbauteils in Richtung der Längserstreckung der Reihenanordnung der Einzelzellen eingestellt werden. Dies macht es möglich, herstellungsbedingte Toleranzen der Dimensionen der Einzelzellen, des Gehäuses oder des Rahmens sowie ein damit verbundenes Spiel zu kompensieren. Ein weiterer Vorteil ist, dass die Montage der Einzelzellen in dem Gehäuse bzw. dem Rahmen während der Herstellung der Akkumulatoranordnung vereinfacht werden kann. So können die Komponenten Kompensationsbauteil, Einzelzellen und Vorspannbauteil locker und mit etwas Spiel in dem Gehäuse oder dem Rahmen angeordnet werden und sodann das Vorspannbauteil in Richtung der Längserstreckung der Reihenanordnung vergrößert werden, bis das Spiel kompensiert ist und die Einzelzellen fixiert sind.

Gemäß einer vorteilhaften Weiterbildung der Erfindung ist das wenigstens eine Kompensationsbauteil oder im Falle mehrerer Kompensationsbauteile wenigstens eines der Kompensationsbauteile als das wenigstens eine Vorspannbauteil ausgebildet. In diesem Falle hat sozusagen das Kompensationsbauteil zugleich die Funktion des Vorspannbauteils.

Das Kompensationsbauteil und/oder das Vorspannbauteil kann z.B. in Form eines Beutels, eines Sacks oder eines Schlauchs aus flexiblem Material, z.B. einem Kunststofffolienmaterial, gebildet sein. Auf diese Weise kann das Kompensationsbauteil bzw. das Vorspannbauteil mit einem Füllmedium befüllt werden und dabei wahlweise Federungs-, Dämpfungs- und/oder Längenveränderungsfunktionen aufweisen. Das Kompensationsbauteil kann auch als Tiefziehteil oder Blasformteil ausgebildet sein.

Gemäß einer vorteilhaften Weiterbildung der Erfindung ist das wenigstens eine Vorspannbauteil am anderen, der Seite des wenigstens einen Kompensationsbauteils gegenüberliegenden Ende der Reihenanordnung der Einzelzellen zwischen der letzten Einzelzelle und dem Gehäuse oder dem Rahmen angeordnet. Auf diese Weise ist zumindest ein separates, vom Kompensationsbauteil getrenntes Vorspannbauteil vorgesehen, das wie erwähnt mit einer einstellbaren Vorspannkraft vorspannbar und/oder in Richtung der Längserstreckung der Reihenanordnung der Einzelzellen längenveränderbar sein kann.

Das wenigstens eine Vorspannbauteil weist einen inneren Hohlraum auf, der mit wenigstens einem Füllmaterial befüllbar ist, wobei das Füllmaterial durch eine äußere Wand des wenigstens einen Vorspannbauteils in dem inneren Hohlraum gehalten wird. Hierzu kann das wenigstens eine Vorspannbauteil z.B. eine Einfüllöffnung für das Füllmaterial und/oder eine Entlüftungsöffnung zum Entlüften von in dem inneren Hohlraum enthaltenen Gasen aufweisen. Gegebenenfalls kann die Einfüllöffnung auch zugleich als Entlüftungsöffnung verwendet werden.

Gemäß einer vorteilhaften Weiterbildung der Erfindung ist der Hohlraum des wenigstens einen Vorspannbauteils mit einem aushärtbaren Füllmaterial gefüllt. Hierfür können z.B. Epoxydharz, Polyurethanschaum, Silikon oder Gummi verwendet werden. Der Begriff "aushärtbar" bezieht sich dabei auf eine Änderungdes Zustands des Füllmaterials derart, dass die Härte des Füllmaterials in einem Aushärteprozess zunimmt, wobei das Füllmaterial auch nach dem Aushärten elastisch verformbar und flexibel bzw. relativ weich sein kann. Insbesondere kann das Füllmaterial so gewählt sein, dass es auch nach dem Aushärten noch solche federnden und/oder dämpfenden Eigenschaften hat, dass es zur Bildung des Kompensationsbauteils geeignet ist.

Gemäß einer vorteilhaften Weiterbildung der Erfindung sind eine, mehrere oder alle der Einzelzellen als Lithium-Ionen-Zellen ausgebildet. Dies hat den Vorteil, dass die Einzelzellen in einer Akkumulatortechnologie ausgebildet werden können, die hohe Kapazität bei geringem Platzbedarf mit guten elektrischen Eigenschaften verbindet. Die bei solchen Zellen auftretenden Dickenveränderungen können von dem erfindungsgemäßen wenigstens einen elastisch verformbaren Kompensationsbauteil aufgenommen und kompensiert werden.

Die eingangs genannte Aufgabe wird gemäß Anspruch 11 ferner gelöst durch ein Verfahren zur Herstellung einer Akkumulatoranordnung mit den Schritten:
a) Bereitstellen einer Akkumulatoranordnung nach einem der Ansprüche 1-10
b) willkürliches Beaufschlagen des wenigstens einen Vorspannbauteils zur Erzeugung oder Erhöhung der vom wenigstens einen Vorspannbauteil auf die Reihenanordnung der Einzelzellen ausgeübte Vorspannkraft,
c) Beenden des Beaufschlagens des wenigstens einen Vorspannbauteils, wenn ein vorbestimmter Wert der Vorspannkraft erreicht ist.

Dies hat den Vorteil, dass die Akkumulatoranordnung auf einfache und schnelle Weise hergestellt werden kann. Insbesondere kommt es nicht zu Problemen bei der Herstellung, wie z.B. Beschädigungen von Zellen durch die Vorspannkraft, weil diese erst nach dem Einsetzen der Einzelzellen in das Gehäuse bzw. den Rahmen auf den gewünschten Wert eingestellt wird. Durch einen solchen Vorspannvorgang kann eine definierte Vorspannkraft erzeugt werden. Dadurch ist das endgültige Produkt zuverlässiger validierbar.

Gemäß einer vorteilhaften Weiterbildung der Erfindung wird der folgende Schritten zwischen den Schritten a) und b) des zuvor genannten Verfahrens ausgeführt: willkürliches Beaufschlagen des wenigstens einen Vorspannbauteils zum Überbrücken eines Spiels der Anordnung.

Die Erfindung wird nachfolgend anhand von Ausführungsbeispielen unter Verwendung von Zeichnungen näher erläutert.

Es zeigen:
- Figur 1: Die Bauteile einer Akkumulatoranordnung in isometrischer Darstellung und
- Figur 2: eine Akkumulatoranordnung in Draufsicht und
- Figur 3: eine weitere Akkumulatoranordnung in Draufsicht und
- Figur 4: Herstellschritte einer Akkumulatoranordnung und
- Figur 5: ein Vorspannbauteil und
- Figur 6: die Schritte des Befüllens des Vorspannbauteils gemäß Figur 5.

In den Figuren werden gleiche Bezugszeichen für einander entsprechende Elemente verwendet.

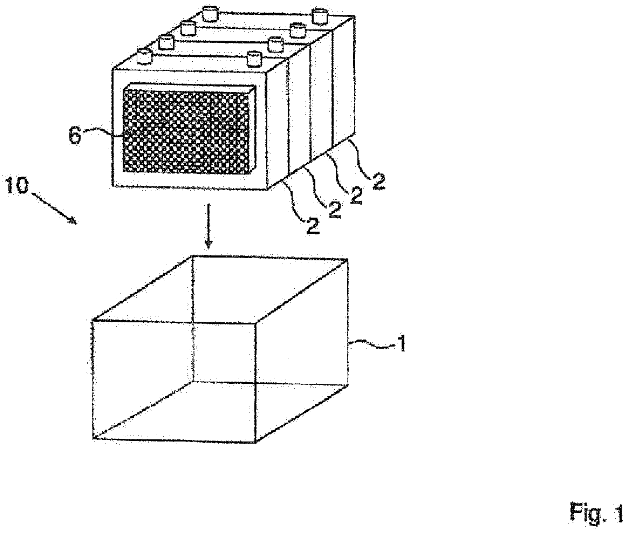

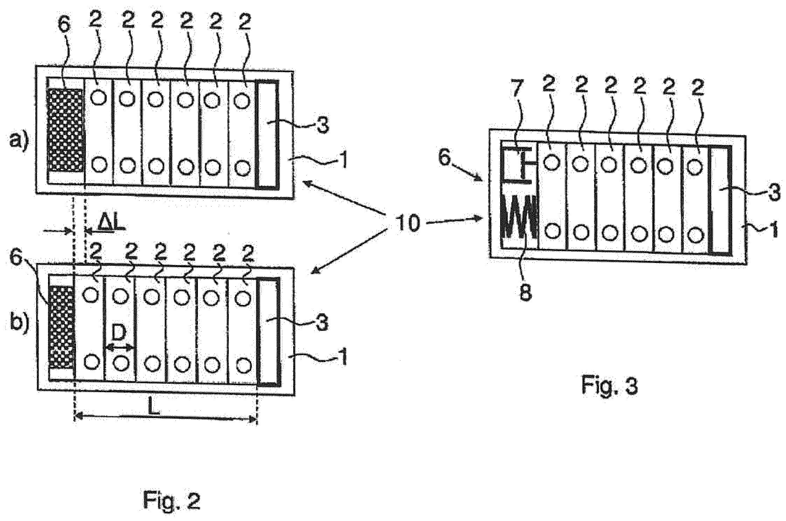

Die Figur 1 zeigt ein Gehäuse 1, in das eine Vielzahl von Einzelzellen 2 mit im Wesentlichen quaderförmigem Gehäuse eingesetzt werden sollen, wie durch den Pfeil dargestellt, um auf diese Weise eine Akkumulatoranordnung 10 zu bilden. Die Einzelzellen 2 sind hintereinander in einer Reihe angeordnet, die Figur 1 zeigt beispielhaft vier Einzelzellen. Selbstverständlich sind größere und kleinere Zellenzahlen ebenfalls möglich. Erkennbar ist in der Figur 1 ferner ein elastisch verformbares Kompensationsbauteil 6, das an einem Ende der Reihenanordnung der Einzelzellen an der letzten Einzelzelle 2 angeordnet ist. Das Kompensationsbauteil 6 stützt die letzte Einzelzelle 2 gegenüber dem Gehäuse 1 ab und fixiert damit die gesamte Reihenanordnung der Einzelzellen 2 in dem Gehäuse 1. Hierbei nimmt das Kompensationsbauteil 6 zudem Längenveränderungen der Reihenanordnung in Folgen von Dickenveränderungen von Einzelzellen 2 auf und kompensiert diese. Dies ist in der Figur 2 näher dargestellt. Die Figur 2 zeigt in den Ansichten a) und b) eine Akkumulatoranordnung gemäß Figur 1, jedoch in diesem Fall mit sechs in Reihe hintereinander angeordneten Einzelzellen 2. Wie erkennbar ist, stützen sich die Einzelzellen 2 an der einen Seite der Reihenanordnung über das Kompensationsbauteil 6 an einer Wand des Gehäuses 1 ab, an der anderen Seite über ein Vorspannbauteil 3.

Die Figur 2 zeigt in der Ansicht a) die Einzelzellen 2 in einem Ladezustand, in dem die Einzelzellen 2 nur wenig geladen sind. In der Ansicht b) sind die Einzelzellen 2 stärker aufgeladen, d.h. sie haben einen höheren Ladezustand. Dies führt zu einer Dickenvergrößerung der Einzelzellen 2 und damit zu einer stärkeren Kompression des Kompensationsbauteils 6, wie in der Figur 2 in der Ansicht b) erkennbar ist. Als Dicke der Einzelzelle sei die Dimension D gemäß Figur 2 verstanden. Die Reihenanordnung der Einzelzellen 2 weist dabei eine Längserstreckung mit einer Länge L auf. Durch die Dickenveränderungen der Einzelzellen ergibt sich insgesamt eine Längenveränderung ΔL der Reihenanordnung, wie in Figur 2 dargestellt.

Das Kompensationsbauteil 6 kann als Block aus elastisch verformbarem Material, z.B. Schaumstoff oder Gummi, ausgebildet sein, ggf. mit inneren Hohlräumen. Das Kompensationsbauteil 6 kann auch als Anordnung mehrerer einzelner Bauteile ausgebildet sein, wie in Figur 3 beispielhaft dargestellt ist. Gemäß Figur 3 kann das Kompensationsbauteil 6 eine Anordnung aus einer Druckfeder 8 und einem Dämpfer 7 aufweisen. Die letzte Einzelzelle 2 stützt sich dann über den Dämpfer 7 und die Druckfeder 8 an einer Wand des Gehäuses 1 ab. Durch solche separaten Bauteile für die Dämpfungsfunktion und die Federungsfunktion, wie in Figur 3 dargestellt, können eine Dämpfungskonstante und eine Federkonstante des Kompensationsbauteils 6 separat auf den jeweiligen Einsatzfall hin optimiert werden.

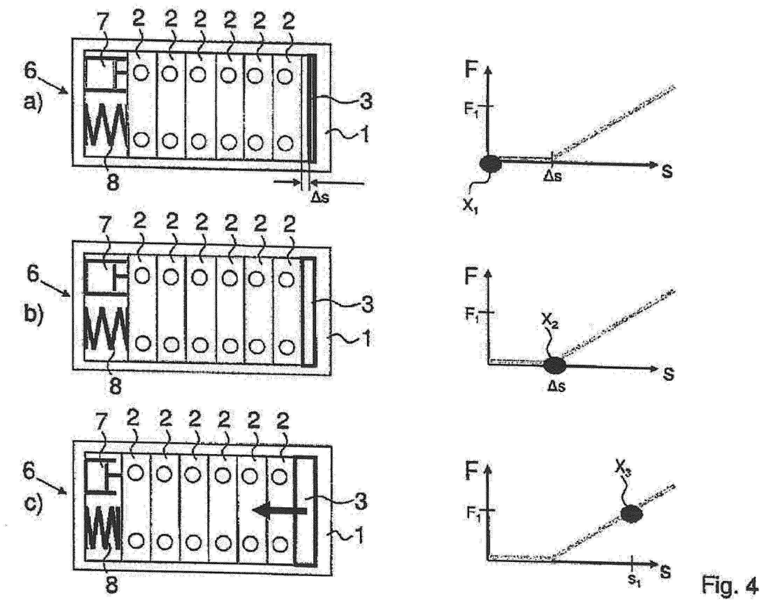

Anhand der Figur 4 wird nun anhand der Akkumulatoranordnung 10 gemäß Figur 3 erläutert, wie eine Fixierung der Einzelzellen 2 in dem Gehäuse 1 mittels des Vorspannbauteils 3 erfolgen kann. Es wird zunächst in der Ansicht a) davon ausgegangen, dass die Einzelzellen 2 in das Gehäuse 1 eingesetzt werden, wobei an einem Ende der Reihenanordnung der Einzelzellen 2 das Kompensationsbauteil 6 angeordnet ist und am anderen Ende das Vorspannbauteil 3. Die Einzelzellen 2, das Kompensationsbauteil 6 und das Vorspannbauteil 3 sind zunächst relativ locker mit einem gewissen Spiel Δs in dem Gehäuse 1 angeordnet, d.h. eine Fixierung der Einzelzellen 2 ist noch nicht erfolgt.

In der Figur 4 ist jeweils rechts von der dargestellten Akkumulatoranordnung 10 ein Kraft/Weg-Diagramm dargestellt, in dem die Kennlinie der Kraft F über den Weg s dargestellt ist. Die Kraft F ist die vom Vorspannbauteil 3 auf die Reihenanordnung der Einzelzellen 2 ausgeübte Kraft, die der entsprechenden Gegenkraft des Kompensationsbauteils 6 entspricht. Gemäß Ansicht a) ist die aufgewendete Kraft F gleich 0, d.h. die Anordnung befindet sich im Arbeitspunkt X₁. In der Ansicht b) wurde das Vorspannbauteil 3 etwas ausgefahren, so dass es an der ihm zugeordneten Einzelzelle 2 anliegt und der Spalt Δs überbrückt ist. Eine Kraft F > 0 wird noch nicht erzeugt, d.h. die Anordnung befindet sich im Arbeitspunkt X₂.

Gemäß Ansicht c) wird nun das Vorspannbauteil 3 weiter ausgefahren, wie durch den Pfeil in Ansicht c) dargestellt ist. Hierdurch werden die Einzelzellen 2 gegen die Druckfeder 8 und den Dämpfer 7 gedrückt, die dabei etwas verkürzt werden. Hierbei steigt die Kraft F an. Dieser Vorgang wird durchgeführt, bis eine gewünschte Vorspannkraft Fi erreicht ist, was an einem Wegpunkt s₁ in dem in der Ansicht c) dargestellten Diagramm erfüllt ist. Die Anordnung befindet sich nun im Arbeitspunkt X₃.

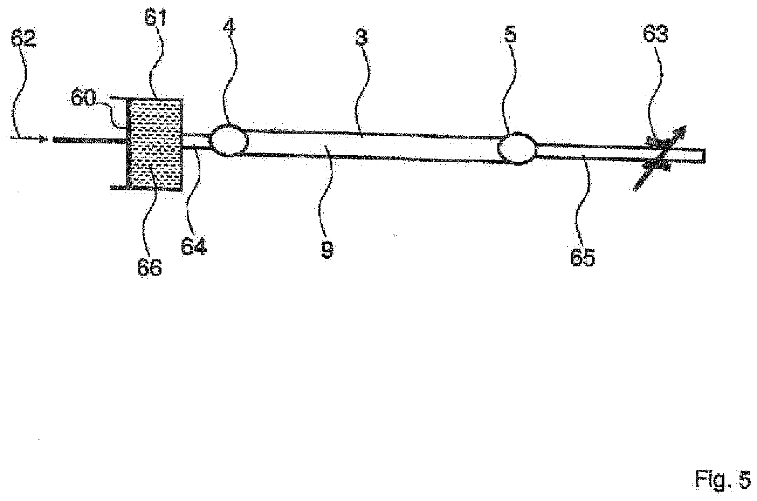

Das längenveränderbare Vorspannbauteil 3 kann z.B. als mit einem Füllmaterial befüllbares flexibles Bauteil, z.B. als Schlauch, Tasche, Beutel oder Blasformteil ausgebildet sein. Die Figur 5 zeigt ein solches Vorspannbauteil 3 in Form eines Schlauchs beispielhaft mit einer Anordnung zum Befüllen mit dem Füllmaterial. Das Vorspannbauteil 3 weist eine Einfüllöffnung 4 für das Einfüllen des Füllmaterials und eine Entlüftungsöffnung 5 zum Entlüften von in einem inneren Hohlraum 9 des Vorspannbauteils 3 enthaltenen Gasen auf. An die Einfüllöffnung 4 ist über einen Stutzen 64 ein Behälter 61 mit dem Füllmaterial 66 angeschlossen. Das Füllmaterial 66 kann über einen Kolben 60 unter Druck gesetzt werden und hierdurch, wie durch den Pfeil 62 dargestellt, in das Vorspannbauteil 3 gedrückt werden. Um in dem Vorspannbauteil 3 enthaltene Gase zu entlüften, ist die Entlüftungsöffnung 5 über einen Schlauch 65 mit einem Entlüftungsventil 63 verbunden, das absperrbar und offenbar ist. Jenseits des Entlüftungsventils 63 mündet der Schlauch 65 z.B. in die Atmosphäre.

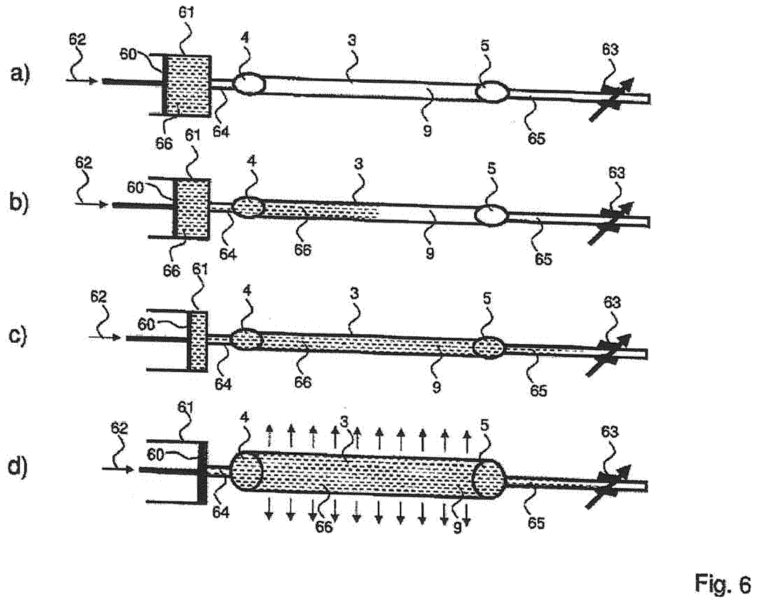

Anhand der Figur 6 wird erläutert, wie ein Befüllungsvorgang des Vorspannbauteils 3 mittels der in Figur 5 dargestellten Anordnung erfolgt. Zunächst zeigt Ansicht a) von Figur 6 wiederum die Anordnung gemäß Figur 5, in der das Vorspannbauteil 3 noch nicht mit Füllmaterial 66 gefüllt ist. Es wird dann das Entlüftungsventil 63 geöffnet. Durch einen Druck 62 auf den Kolben 60 wird Füllmaterial 66 in das Vorspannbauteil 3 gepresst, wie die Ansicht b) erkennen lässt. Die Ansicht c) zeigt, dass das gesamte Vorspannbauteil 3 mit dem Füllmaterial 66 gefüllt ist. Das Füllmaterial 66 erstreckt sich bereits teilweise in den Schlauch 65. Nun wird das Entlüftungsventil 63 geschlossen. In Folge des Schließens des Entlüftungsventils 63 kann das Füllmaterial 66 nicht weiter aus dem Vorspannbauteil 3 austreten. Durch weiteren Druck 62 auf den Kolben 60, wie in Ansicht d) erkennbar ist, wird das Vorspannbauteil 3 sozusagen mit Überdruck mit dem Füllmaterial 66 beaufschlagt, so dass es sich in Richtung der in Ansicht d) dargestellten vertikalen Pfeile ausdehnt. Diese Ausdehnung entspricht z.B. der in Figur 4 in Ansicht c) dargestellten Verdickung des Vorspannbauteils 3.

Nach Abschluss des Vorgangs gemäß Figur 6 kann das Vorspannbauteil 3 an der Einfüllöffnung 4 und der Entlüftungsöffnung 5 verschlossen werden und die übrigen Teile wie der Vorratsbehälter 61 mit dem Stutzen 64 sowie der Schlauch 65 mit dem Entlüftungsventil 63 entfernt werden.

## Patentansprüche

1. Akkumulatoranordnung (10) mit einer Vielzahl von Einzelzellen (2), die jeweils als elektrochemische Akkumulatorzellen ausgebildet sind und jeweils prismatisch geformte Gehäuse aufweisen, wobei die Einzelzellen (2) in wenigstens einer Reihe hintereinander angeordnet und in einem Gehäuse (1) oder einem Rahmen angeordnet sind, so dass sie zu einem Akkumulatorblock zusammengehalten sind, wobei:
a) eine, mehrere oder alle der Einzelzellen (2) als Akkumulatorzelle ausgebildet sind, die in Abhängigkeit vom jeweiligen Ladezustand ihre Dicke verändert, und
b) zumindest an einem Ende der Reihenanordnung der Einzelzellen (2) zwischen der letzten Einzelzelle (2) und dem Gehäuse (1) oder dem Rahmen wenigstens ein elastisch verformbares Kompensationsbauteil (6) angeordnet ist, das dazu eingerichtet ist, die infolge von Änderungen des Ladezustands auftretenden Dickenveränderungen von Einzelzellen (2) und sich hieraus ergebenden Längenveränderungen (AL) der Reihenanordnung aufzunehmen und zu kompensieren,
**dadurch gekennzeichnet, dass** zumindest an einem Ende der Reihenanordnung der Einzelzellen (2) wenigstens ein Vorspannbauteil (3) zwischen der letzten Einzelzelle (2) und dem Gehäuse (1) oder dem Rahmen angeordnet ist, das diese letzte Einzelzelle (2) gegenüber dem Gehäuse (1) oder dem Rahmen abstützt, wobei über das wenigstens eine Vorspannbauteil (3) die Reihenanordnung der Einzelzellen (2) gegenüber dem Gehäuse (1) oder dem Rahmen mit einer einstellbaren Vorspannkraft vorspannbar ist, und dass
das wenigstens eine Vorspannbauteil (3) einen inneren Hohlraum (9) aufweist, der mit einem Füllmaterial (66) befüllbar ist, wobei das Füllmaterial (66) durch eine äußere Wand des wenigstens einen Vorspannbauteils (3) in dem inneren Hohlraum (9) gehalten wird.

2. Akkumulatoranordnung nach Anspruch 1, wobei das wenigstens eine Kompensationsbauteil (6) als auf Druck belastbares federndes Bauteil mit oder ohne Dämpfungseigenschaften ausgebildet ist.

3. Akkumulatoranordnung nach einem der vorhergehenden Ansprüche, wobei das wenigstens eine Kompensationsbauteil (6) eine Anordnung aus wenigstens einem Dämpferelement (7) und wenigstens einer Druckfeder (8) aufweist.

4. Akkumulatoranordnung nach einem der vorhergehenden Ansprüche, wobei das wenigstens eine Kompensationsbauteil (6) zur Kompensation von Längenveränderungen (AL) der Reihenanordnung der Einzelzellen (2), die aus infolge von Änderungen des Ladezustands auftretenden Dickenveränderungen resultieren, von wenigstens 10 mm ausgebildet ist.

5. Akkumulatoranordnung nach einem der vorhergehenden Ansprüche, wobei zumindest an einem Ende der Reihenanordnung der Einzelzellen (2) das wenigstens eine Vorspannbauteil (3) zwischen der letzten Einzelzelle (2) und dem Gehäuse (1) oder dem Rahmen angeordnet ist, das diese letzte Einzelzelle (2) gegenüber dem Gehäuse (1) oder dem Rahmen abstützt, wobei das wenigstens eine Vorspannbauteil (3) willkürlich steuerbar zumindest in Richtung der Längserstreckung (L) der Reihenanordnung der Einzelzellen (2) längenveränderbar ist.

6. Akkumulatoranordnung nach einem der vorhergehenden Ansprüche, wobei das wenigstens eine Kompensationsbauteil (6) oder im Falle mehrerer Kompensationsbauteile (6) wenigstens eines der Kompensationsbauteile (6) als das wenigstens eine Vorspannbauteil (3) ausgebildet ist.

7. Akkumulatoranordnung nach einem der vorhergehenden Ansprüche, wobei das wenigstens eine Vorspannbauteil (3) am anderen, der Seite des wenigstens einen Kompensationsbauteils (6) gegenüberliegenden Ende der Reihenanordnung der Einzelzellen (2) zwischen der letzten Einzelzelle (2) und dem Gehäuse (1) oder dem Rahmen angeordnet ist.

8. Akkumulatoranordnung nach einem der vorhergehenden Ansprüche, wobei das wenigstens eine Vorspannbauteil (3) eine Einfüllöffnung (4) für das Füllmaterial (66) und/oder eine Entlüftungsöffnung (5) zum Entlüften von in dem inneren Hohlraum (9) enthaltenen Gasen aufweist.

9. Akkumulatoranordnung nach einem der vorhergehenden Ansprüche, wobei der Hohlraum (9) des wenigstens einen Vorspannbauteils (3) mit einem aushärtbaren Füllmaterial (66), insbesondere Epoxydharz, Polyurethanschaum, Silikon oder Gummi, gefüllt ist.

10. Akkumulatoranordnung nach einem der vorhergehenden Ansprüche, **dadurch gekennzeichnet, dass** eine, mehrere oder alle Einzelzellen (2) als Lithium-Ionen-Zellen ausgebildet sind.

11. Verfahren zur Herstellung einer Akkumulatoranordnung (10) mit den Schritten:
a) Bereitstellen einer Akkumulatoranordnung (10) nach einem der Ansprüche 1 bis 10,
b) willkürliches Beaufschlagen des wenigstens einen Vorspannbauteils (3) zur Erzeugung oder Erhöhung der vom wenigstens einen Vorspannbauteil (3) auf die Reihenanordnung der Einzelzellen (2) ausgeübte Vorspannkraft (F),
c) Beenden des Beaufschlagens des wenigstens einen Vorspannbauteils (3), wenn ein vorbestimmter Wert (F₁) der Vorspannkraft (F) erreicht ist.

12. Verfahren nach Anspruch 11, **dadurch gekennzeichnet, dass** der folgende Schritt zwischen den Schritten a) und b) des Anspruchs 11 ausgeführt wird: willkürliches Beaufschlagen des wenigstens einen Vorspannbauteils (3) zum Überbrücken eines Spiels (Δs) der Anordnung.

## Claims

1. Rechargeable battery arrangement (10) having a large number of individual cells (2) which are each in the form of electrochemical rechargeable battery cells and each have prismatically shaped housings, wherein the individual cells (2) are arranged in at least one row one behind the other and are arranged in a housing (1) or a frame, so that they are held together to form a rechargeable battery block, wherein:
a) one, several or all of the individual cells (2) are in the form of a rechargeable battery cell which changes its thickness depending on the respective state of charge, and
b) at least one elastically deformable compensation component (6) is arranged between the last individual cell (2) and the housing (1) or the frame at least at one end of the series arrangement of the individual cells (2), the said elastically deformable compensation component being designed to absorb and to compensate for changes in thickness of individual cells (2) occurring as a result of changes in the state of charge and resulting changes (AL) in length of the series arrangement,
**characterized in that**
at least one prestressing component (3) is arranged between the last individual cell (2) and the housing (1) or the frame at least at one end of the series arrangement of the individual cells (2), the said prestressing component supporting this last individual cell (2) in relation to the housing (1) or the frame, wherein the series arrangement of the individual cells (2) can be prestressed in relation to the housing (1) or the frame by an adjustable prestressing force by means of the at least one prestressing component (3), and **in that** the at least one prestressing component (3) has an inner cavity (9) which can be filled with a filling material (66), wherein the filling material (66) is held in the inner cavity (9) by an outer wall of the at least one prestressing component (3).

2. Rechargeable battery arrangement according to claim 1,
wherein the at least one compensation component (6) is in the form of a resilient component which can be subjected to compressive loading and has or does not have damping properties.

3. Rechargeable battery arrangement according to either of the preceding claims,
wherein the at least one compensation component (6) has an arrangement comprising at least one damper element (7) and at least one compression spring (8).

4. Rechargeable battery arrangement according to one of the preceding claims,
wherein the at least one compensation component (6) is designed to compensate for changes (AL) in length of the series arrangement of the individual cells (2), which changes in length result from changes in thickness which occur as a result of changes in the state of charge, of at least 10 mm.

5. Rechargeable battery arrangement according to one of the preceding claims,
wherein the at least one prestressing component (3) is arranged between the last individual cell (2) and the housing (1) or the frame at least at one end of the series arrangement of the individual cells (2), the said prestressing component supporting this last individual cell (2) in relation to the housing (1) or the frame, wherein the length of the at least one prestressing component (3) can be changed in a manner arbitrarily controlled at least in the direction of the longitudinal extent (L) of the series arrangement of the individual cells (2).

6. Rechargeable battery arrangement according to one of the preceding claims,
wherein the at least one compensation component (6) or, in the case of a plurality of compensation components (6), at least one of the compensation components (6) is in the form of the at least one prestressing component (3).

7. Rechargeable battery arrangement according to one of the preceding claims,
wherein the at least one prestressing component (3) is arranged between the last individual cell (2) and the housing (1) or the frame at the other end, which is situated opposite the side of the at least one compensation component (6), of the series arrangement of the individual cells (2).

8. Rechargeable battery arrangement according to one of the preceding claims,
wherein the at least one prestressing component (3) has a filling opening (4) for the filling material (66) and/or a venting opening (5) for venting gases which are contained in the inner cavity (9).

9. Rechargeable battery arrangement according to one of the preceding claims,
wherein the cavity (9) in the at least one prestressing component (3) is filled with a curable filling material (66), in particular epoxy resin, polyurethane foam, silicone or rubber.

10. Rechargeable battery arrangement according to one of the preceding claims,
**characterized in that**
one, several or all of the individual cells (2) are in the form of lithium-ion cells.

11. Method for producing a rechargeable battery arrangement (10), comprising the steps of:
a) providing a rechargeable battery arrangement (10) according to one of claims 1 to 10,
b) arbitrarily acting on the at least one prestressing component (3) for generating or increasing the prestressing force (F) which is exerted on the series arrangement of the individual cells (2) by the at least one prestressing component (3),
c) ending the action on the at least one prestressing component (3) when a predetermined value (F1) of the prestressing force (F) is reached.

12. Method according to claim 11,
**characterized in that**
the following step is executed between steps a) and b) of claim 11: arbitrarily acting on the at least one prestressing component (3) for bridging play (Δs) of the arrangement.

## Revendications

1. Ensemble de batterie (10) avec une multiplicité de cellules individuelles (2), qui sont respectivement réalisées sous forme de cellules de batterie électrochimiques et qui présentent respectivement des boîtiers de forme prismatique, dans lequel les cellules individuelles (2) sont agencées l'une derrière l'autre en au moins une rangée et sont disposées dans une caisse (1) ou un cadre, de telle manière qu'elles soient réunies en un bloc de batterie, dans lequel:
a) une, plusieurs ou la totalité des cellules individuelles (2) sont réalisées en forme de cellules de batterie, dont l'épaisseur change en fonction de leur état de charge respectif, et
b) au moins un élément de compensation élastiquement déformable (6) est disposé au moins à une extrémité d'un agencement en rangée des cellules individuelles (2) entre la dernière cellule individuelle (2) et la caisse (1) ou le cadre, qui est conçu pour reprendre et pour compenser des variations d'épaisseur de cellules individuelles (2) dues à des variations de l'état de charge et des variations de longueur (AL) de l'agencement en rangée qui en résultent,
**caractérisé en ce qu'**un
élément de précontrainte (3) est disposé au moins à une extrémité de l'agencement en rangée des cellules individuelles (2) entre la dernière cellule individuelle (2) et la caisse (1) ou le cadre, lequel soutient cette dernière cellule individuelle (2) par rapport à la caisse (1) ou au cadre, dans lequel l'agencement en rangée des cellules individuelles (2) peut être précontraint par rapport à la caisse (1) ou au cadre avec une force de précontrainte réglable au moyen dudit au moins un élément de précontrainte (3), et
**en ce que** ledit au moins un élément de précontrainte (3) présente une cavité intérieure (9), qui peut être remplie d'un matériau de remplissage (66), dans lequel le matériau de remplissage (66) est maintenu dans la cavité intérieure (9) par une paroi extérieure dudit au moins un élément de précontrainte (3).

2. Ensemble de batterie selon la revendication 1,
dans lequel ledit au moins un élément de compensation (6) est réalisé sous la forme d'un élément élastique pouvant être mis sous pression avec ou sans des propriétés d'amortissement.

3. Ensemble de batterie selon l'une quelconque des revendications précédentes,
dans lequel ledit au moins un élément de compensation (6) présente un agencement d'au moins un élément d'amortissement (7) et d'au moins un ressort de pression (8).

4. Ensemble de batterie selon l'une quelconque des revendications précédentes,
dans lequel ledit au moins un élément de compensation (6) est réalisé en vue de la compensation de variations de longueur (AL) d'au moins 10 mm de l'agencement en rangée des cellules individuelles (2), qui résultent de variations d'épaisseur dues à des variations de l'état de charge.

5. Ensemble de batterie selon l'une quelconque des revendications précédentes,
dans lequel ledit au moins un élément de précontrainte (3) est disposé au moins à une extrémité de l'agencement en rangée des cellules individuelles (2) entre la dernière cellule individuelle (2) et la caisse (1) ou le cadre, lequel soutient cette dernière cellule individuelle (2) par rapport à la caisse (1) ou au cadre, dans lequel ledit au moins un élément de précontrainte (3) est variable en longueur de façon réglable arbitrairement au moins dans la direction de l'extension longitudinale (L) de l'agencement en rangée des cellules individuelles (2).

6. Ensemble de batterie selon l'une quelconque des revendications précédentes,
dans lequel ledit au moins un élément de compensation (6) ou dans le cas de plusieurs éléments de compensation (6) au moins un des éléments de compensation (6) constitue ledit au moins un élément de précontrainte (3).

7. Ensemble de batterie selon l'une quelconque des revendications précédentes,
dans lequel ledit au moins un élément de précontrainte (3) est disposé à l'autre extrémité de l'agencement en rangée des cellules individuelles (2), opposée au côté dudit au moins un élément de compensation (6), entre la dernière cellule individuelle (2) et la caisse (1) ou le cadre.

8. Ensemble de batterie selon l'une quelconque des revendications précédentes,
dans lequel ledit au moins un élément de précontrainte (3) présente une ouverture de remplissage (4) pour le matériau de remplissage (66) et/ou une ouverture d'évent (5) pour évacuer des gaz contenus dans la cavité intérieure (9).

9. Ensemble de batterie selon l'une quelconque des revendications précédentes,
dans lequel la cavité (9) dudit au moins un élément de précontrainte (3) est remplie d'un matériau de remplissage durcissable (66), en particulier de résine époxy, de mousse de polyuréthane, de silicone ou de caoutchouc.

10. Ensemble de batterie selon l'une quelconque des revendications précédentes,
**caractérisé en ce qu'**une,
plusieurs ou la totalité des cellules individuelles (2) sont constituées de cellules lithium-ions.

11. Procédé de fabrication d'un ensemble de batterie (10) présentant les étapes suivantes:
a) préparer un ensemble de batterie (10) selon l'une quelconque des revendications 1 à 10,
b) alimenter arbitrairement ledit au moins un élément de précontrainte (3) pour la production ou l'augmentation de la force de précontrainte (F) exercée par ledit au moins un élément de précontrainte (3) sur l'agencement en rangée des cellules individuelles (2),
c) cesser l'alimentation dudit au moins un élément de précontrainte (3), lorsqu'une valeur prédéterminée (F1) de la force de précontrainte (F) est atteinte.

12. Procédé selon la revendication 11,
**caractérisé en ce que**
l'on exécute l'étape suivante entre les étapes a) et b) de la revendication 11: alimenter arbitrairement ledit au moins un élément de précontrainte (3) pour surmonter un jeu (•s) de l'ensemble.
